# EUROPEAN PATENT SPECIFICATION

(11) **EP 2 730 431 B1**
(45) Date of publication and mention of the grant of the patent: **28.06.2017**
(21) Application number: 13191506.8
(22) Date of filing: 05.11.2013
(51) Int. Cl.: B60C 1/00, C08K 5/3492, C08K 5/1545

(54) **Rubber composition and tire with rubber containing flavone**
Kautschukzusammensetzung und Reifen mit Kautschuk, der Flavon enthält
Composition de caoutchouc et pneu avec caoutchouc contenant du flavone

(30) Priority: 13.11.2012 US 201213674978
(43) Date of publication of application: 14.05.2014
(73) Proprietor: The Goodyear Tire & Rubber Company, Akron, Ohio 44316 (US)
(72) Inventor: Sandstrom, Paul Harry, Cuyahoga Falls, Ohio 44223 (US)
(74) Representative: Kutsch, Bernd

(56) References cited:
- EP-A1- 0 852 248
- EP-A1- 1 216 851
- EP-A1- 1 391 327
- DATABASE CA [Online] CHEMICAL ABSTRACTS SERVICE, COLUMBUS, OHIO, US; 30 April 2009 (2009-04-30), TSUBOI, TETSUYA: "Miricitrin-containing rubber compositions for environmentally friendly tires", XP002718944, retrieved from STN Database accession no. 2009:519261 -& JP 2009 091428 A (TOYO RUBBER INDUSTRY CO., LTD., JAPAN) 30 April 2009 (2009-04-30)
- DATABASE CA [Online] CHEMICAL ABSTRACTS SERVICE, COLUMBUS, OHIO, US; 30 April 2009 (2009-04-30), TSUBOI, TETSUYA: "Natural polyphenol-containing rubber compositions for environmentally friendly tires", XP002718945, retrieved from STN Database accession no. 2009:519264 -& JP 2009 091427 A (TOYO RUBBER INDUSTRY CO., LTD., JAPAN) 30 April 2009 (2009-04-30)

## Description

### Background of the Invention

A tire is a composite of several components each serving a specific and unique function yet all synergistically functioning to produce the desired performance. In several tire components, an in-situ resin is included in a rubber composition to impart desirable properties to the rubber composition, including hardness, tear strength, and adhesion to reinforcement. Typically, methylene acceptor - methylene donor systems are used as in-situ resins in combination with cobalt to promote adhesion of the rubber to steel cords. Unfortunately, cobalt is undesirable from an environmental standpoint. Therefore, there exists a need for cobalt replacement without sacrificing the beneficial properties resulting from its use.

EP-A- 0 852 248 describes a tire component comprising a diene rubber, a methylene donor, a methylene acceptor and an ester of an aminobenzoic acid.

EP-A- 1 391 327 describes rubber compositions for tires comprising a flavone and a methylene donor.

JP-A- 2009 091428 and JP-A- 2009 091427 each describe the use of a flavone as an antioxidant in a rubber composition for use in tires.

### Summary of the Invention

The present invention relates to a rubber composition in accordance with claim 1 and to a tire in accordance with claim 13.

Dependent claims refer to preferred embodiments of the invention.

### Detailed Disclosure of the Invention

There is disclosed a pneumatic tire having a component containing a rubber composition comprising
(A) a diene based elastomer; and
(B) an adhesion promoter derived from
   (1) a flavone; and
   (2) the reaction product of
      (a) a methylene donor selected from the group consisting of hexamethylenetetramine, hexamethoxymethylmelamine, hexamethoxymethylmelamine, imino-methoxymethylmelamine, imino-isobutoxymethylmelamine, lauryloxymethylpyridinium chloride, ethoxymethylpyridinium chloride, trioxan hexamethoxymethylmelamine and N-substituted oxymethyl melamines of the formula: 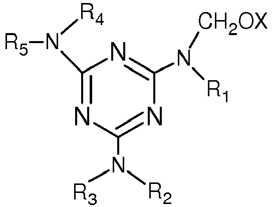 wherein X is selected from the group consisting of hydrogen and an alkyl having from 1 to 8 carbon atoms; and R₁, R₂, R₃, R₄ and R₅ are individually selected from the group consisting of hydrogen, an alkyl having from 1 to 8 carbon atoms, the group - CH₂OX and their condensation products; and
      (b) a methylene acceptor selected from the group consisting of resorcinol, resorcinolic derivatives, monohydric phenols and their derivatives, dihydric phenols and their derivatives, polyhydric phenols and their derivatives, unmodified phenol novolak resins, modified phenol novolak resins, phenol formaldehyde resins, and resorcinol novolak resins;
   wherein the rubber composition comprises less than 0.1 phr of cobalt.

The present invention relates to a pneumatic tire. Pneumatic tire means a laminated mechanical device of generally toroidal shape (usually an open torus) having beads and a tread and made of rubber, chemicals, fabric and steel or other materials. The present invention relates to both bias and radial-ply tires. Preferably, the present invention is a radial-ply tire. Radial-ply tire means a belted or circumferentially-restricted pneumatic tire in which the carcass ply cords which extend from bead to bead are laid at cord angles between 65° and 90° with respect to the equatorial plane of the tire.

The rubber composition for use in the tire component may contain a natural or synthetic diene derived rubber. Representative of the rubbers include medium vinyl polybutadiene, styrene-butadiene rubber, synthetic cis-1,4-polyisoprene, synthetic 3,4-polyisoprene, natural rubber, cis-polybutadiene, styrene-isoprene rubber, styrene-isoprene-butadiene rubber, acrylonitrile-butadiene rubber, carboxylated acrylonitrile-butadiene rubber and mixtures thereof. Preferably, the rubber is natural rubber, styrene-butadiene rubber or cis-polybutadiene.

The component of the tire of the present invention contains an adhesion promoter derived from a flavone, a methylene donor, and a methylene acceptor. The adhesion promoter is useful particularly in an application where a rubber composition must adhere to a metal surface. Such an application occurs in a pneumatic tire, for instance, wherein a rubber composition reinforced with a steel cord must have sufficient adhesion of the rubber composition to the steel cord.

A flavone is an essential component in the present invention. Such chemicals are commercially available from Indofine Chemical Company, Inc. Flavones are naturally occurring substances found in a variety of plants. Flavones are generally described by the formula (I), 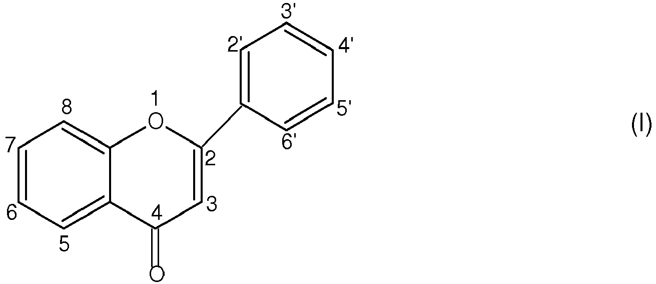 with various substitution of functional groups at the 1-8 and 2'-6' ring carbons.

Flavones useful in the present invention may include one or more of the following: acacetin (5,7-dihydroxy-4'-methoxyflavone; linarigenin), amentoflavone trihydrate, amentoflavone-7,4,4'-trimethyl ether (sciadopitysin), apigenin (5,7,4'-trihydroxyflavone), apigenin-7-glucoside (apigetrin, cosmetin, cosmiin), apiin (apigenin-7-apioglucoside), avicularin (quercetin-3-arabinoside), baicalein (5,6,7-trihydroxyflavone), baicalein trimethyl ether (5,6,7-trimethoxyflavone), baicalin (baicalein-7-O-glucuronide), 5,6-benzoflavone (β-naphthoflavone), 7,8-benzoflavone (α-naphthoflavone), 3'-benzyloxy-5,7-dihydroxy-3,4'-dimethoxyflavone, 3'-benzyloxy-5,6,7,4'-tetramethoxyflavone, 6-bromo-4'-chloroflavone, 6-bromoflavone 8-carboxy-3-methylflavone (3-methylflavone-8-carboxylic acid), 4'-chloro-6,8-dibromoflavone, 4'-chloroflavone, 6-chloroflavone, 4'-chloro-6-methylflavone, 6-chloro-7-methylflavone, chrysoeriol, cupressuflavone trihydrate, datiscetin, datiscoside, 6,8-dibromoflavone, 6,4'-dichloroflavone, 6,8-dichloroflavone, 6,4'-dichloro-7-methylflavone, 3,7-dihydroxy-3',4'-dimethoxyflavone (fisetin-3',4'-dimethyl ether), 3,5-dihydroxyflavone, 3,6-dihydroxyflavone, 3,7-dihydroxyflavone, 3,2'-dihydroxyflavone, 3,3'-dihydroxyflavone, 5,7-dihydroxyflavone (chrysin), 5,2'-dihydroxyflavone, 5,3'-dihydroxyflavone, 5,4'-dihydroxyflavone, 6,7-dihydroxyflavone, 6,2'-dihydroxyflavone, 6,3'-dihydroxyflavone, 6,4'-dihydroxyflavone, 7,8-dihydroxyflavone, 7,2'-dihydroxyflavone, 7,3'-dihydroxyflavone, 7,4'-dihydroxyflavone, 2',3'-dihydroxyflavone, 2',4'-dihydroxyflavone, 3',4'-dihydroxyflavone (4-hydroxyflavonol), 5,6-dihydroxy-7-methoxyflavone (baicalein-7-methyl ether), 5,4'-dihydroxy-7-methoxyflavone (genkwanin; 7-methoxyapigenin), 3',4'-dihydroxy-a-naphthoflavone, 3',4'-dihydroxy-b-naphthoflavone, 5,8-dihydroxy-3,7,3',4'-tetramethoxyflavone (gossypetin 3,7,3',4'-tetramethyl ether), 3,7-dihydroxy-3',4',5'-trimethoxyflavone (robinetin trimethyl ether), 5,3'-dihydroxy-6,7,4'-trimethoxyflavone (eupatorin), 5,7-dihydroxy-3',4',5'-trimethoxyflavone, 3,5-dimethoxyflavone, 3,6-dimethoxyflavone, 3,7-dimethoxyflavone, 3,2'-dimethoxyflavone, 3,3'-dimethoxyflavone, 3,4'-dimethoxyflavone, 5,7-dimethoxyflavone (dhrysin dimethyl ether), 5,2'-dimethoxyflavone, 5,3'-dimethoxyflavone, 5,4'-dimethoxyflavone, 6,7-dimethoxyflavone, 6,2'-dimethoxyflavone, 6,3'-dimethoxyflavone, 6,4'-dimethoxyflavone, 7,8-dimethoxyflavone, 7,2'-dimethoxyflavone, 7,3'-dimethoxyflavone, 7,4'-dimethoxyflavone, 2',3'-dimethoxyflavone, 2',4'-dimethoxyflavone, 3',4'-dimethoxyflavone, 3',4'-dimethoxyflavonol (3-hydroxy-3',4'-dimethoxyflavone), 2',3'-dimethoxy-3-hydroxyflavone, 2',4'-dimethoxy-3-hydroxyflavone, 3',4'-dimethoxy-a-naphthoflavone, 3',4'-dimethoxy-b-naphthoflavone, 3,4'-dimethoxy-5,7,3'-trihydroxyflavone (5,7,3'-trihydroxy-3,4'-dimethoxyflavone), diosmetin, diosmin (barosmin, diosmetin-7-rutinoside), eupatorin-5-methyl ether, fisetin (3,7,3',4'-tetrahydroxyflavone), flavone (2-Phenylchromone), fortunellin (acacetin-7-neohesperidoside), galangin (3,5,7-trihydroxyflavone), gardenin (5-hydroxy-6,7,8,3',4',5'-hexamethoxyflavone), geraldol, gossypetin (3,5,7,8,3',4'-hexahydroxyflavone), gossypin (3,5,7,8,3',4'-hexahydroxyflavone-8-glucoside), 5,6,7,3',4',5'-hexamethoxyflavone hinokiflavone (4',6"-O-biapigenin), homoorientin (isoorientin), 6-hydroxyapigenin (scutellarein), 5-hydroxy-7,4'-dimethoxy-6,8-dimethylflavone (eucalyptin), 3-hydroxy-6,4'-dimethoxyflavone, 3-hydroxy-7,4'-dimethoxyflavone, 3-hydroxy-2',4'-dimethoxy-6-methylflavone, 3-hydroxyflavone (flavonol), 5-hydroxyflavone (primuletin), 6-hydroxyflavone, 7-hydroxyflavone, 2'-hydroxyflavone, 3'-hydroxyflavone, 4'-hydroxyflavone, 6-hydroxyflavone-b-D-glucoside, 7-hydroxyflavone-b-d-glucoside (7-b-d-glucosyloxyflavone), 3-hydroxy-5-methoxyflavone (5-methoxyflavonol), 3-hydroxy-6-methoxyflavone (6-methoxyflavonol), 3-hydroxy-7-methoxyflavone (7-methoxyflavonol), 3-hydroxy-2'-methoxyflavone, 3-hydroxy-3'-methoxyflavone, 3-hydroxy-4'-methoxyflavone, 5-hydroxy-7-methoxyflavone (tectochrysin, methyl chrysin), 5-hydroxy-2'-methoxyflavone, 5-hydroxy-3'-methoxyflavone, 5-hydroxy-4'-methoxyflavone, 6-hydroxy-7-methoxyflavone, 6-hydroxy-2'-methoxyflavone, 6-hydroxy-3'-methoxyflavone, 6-hydroxy-4'-methoxyflavone, 7-hydroxy-2'-methoxyflavone, 7-hydroxy-3'-methoxyflavone, 7-hydroxy-4'-methoxyflavone (pratol), 8-Hydroxy-7-methoxyflavone, 4'-hydroxy-5-methoxyflavone, 4'-hydroxy-6-methoxyflavone, 4'-hydroxy-7-methoxyflavone, 4'-hydroxy-3'-methoxyflavone, 3-hydroxy-4'-methoxy-6-methylflavone, 3-hydroxy-6-methylflavone (6-methylflavonol), 7-hydroxy-3-methylflavone, 7-hydroxy-5-methylflavone, 2'-hydroxy-α-naphthoflavone, 2'-hydroxy-β-naphthoflavone, 4'-hydroxy-α-naphthoflavone, 4'-hydroxy-β-naphthoflavone, 5-hydroxy-3,7,3',4'-tetramethoxyflavone (quercetin tetramethyl ether), 3'-hydroxy-5,6,7,4'-tetramethoxyflavone, 3-hydroxy-3',4',5'-trimethoxyflavone, 3-hydroxy-6,2',3'-trimethoxyflavone, 3-hydroxy-6,2',4'-trimethoxyflavone, 3-hydroxy-6,3',4'-trimethoxyflavone, 3-hydroxy-7,2',3'-trimethoxyflavone, 3-hydroxy-7,2',4'-trimethoxyflavone, hyperoside with HPLC (hyperin, quercetin-3-galactoside), isoquercitrin (quercetin-3-glucoside), isorhamnetin, isorhamnetin-3-glucoside, isorhamnetin-3-rutinoside (narcisin), isorhoifolin (apigenin-7-rutinoside), isovitexin, kaempferide (3,5,7-trihydroxy-4'-methoxyflavone), kaempferide, kaempferol (3,5,7,4'-tetrahydroxyflavone), kaempferol-3-glucoside with HPLC (astragalin), kaempferol-7-neohesperidoside, kaempferol-3-rutinoside, kaempferol-3,7,4'-trimethylether, karanjin, linarin (acacetin-7-rutinoside), liquiritigenin monohydrate, luteolin (5,7,3',4'-tetrahydroxyflavone), luteolin-7,3'-diglucoside, luteolin-4'-glucoside, luteolin-7-glucoside, maritimein, 3-methoxyflavone, 5-methoxyflavone, 6-methoxyflavone, 7-methoxyflavone, 2'-methoxyflavone, 3'-methoxyflavone, 4'-methoxyflavone, 4'-methoxyflavonol, 6-methoxyluteolin, 2'-methoxy-a-naphthoflavone (2'-methoxy-7,8-benzoflavone), 2'-methoxy-b-naphthoflavone, 4'-methoxy-a-naphthoflavone, 6-methylflavone, 8-methylflavone, 6-methyl-4'-methoxyflavone, 8-methyl-4'-methoxyflavone, morin, myricetin (cannabiscetin, 3,5,7,3',4',5'-hexahydroxyflavone), myricitrin dihydrate (myricetin-3-rhamnoside dihydrate), myricitrin (myricetin-3-rhamnoside), neodiosmin (diosmetin-7-neohesperidoside), orientin (luteolin-8-c-glucoside), peltatoside (quercetin-3-arabinoglucoside), 3,7,3',4',5'-pentahydroxyflavone (robinetin, 5-hydroxyfisetin), 3,7,3',4',5'-pentahydroxyflavone, 5,6,7,3',4'-pentamethoxyflavone (sinensetin), 5,7,3',4',5'-pentamethoxyflavone, quercetagetin, quercetin dihydrate (3,5,7,3',4'-pentahydroxyflavone dihydrate), quercetin, Quercetin-3-O-b-D-glucopyranosyl-6"-acetate, quercetin-3,5,7,3',4'-pentamethyl ether (3,5,7,3',4'-pentamethoxyflavone), quercetin-3-O-sulfate potassium salt, quercetin-3,7,3',4'-tetramethyl ether (retusin), quercitrin (quercetin-3-rhamnoside), quercitrin, rhoifolin (apigenin-7-neohesperidoside, apigenin-7-rhamnoglucoside), rhoifolin, robinin (kaempferol-3-robinoside-7-rhamnoside), rutin trihydrate, rutin trihydrate, saponarin, scutellarein tetramethyl ether (5,6,7,4'-tetramethoxyflavone), spiraeoside, sulfuretin (6,3',4'-Trihydroxyaurone), syringetin-3-galactoside, syringetin-3-glucoside, tamarixetin with HPLC (quercetin-4'-methylether, 4'-methoxy-3,5,7,3'-tetrahydroflavone), 3,5,7,4'-tetrahydroxy-3',5'-dimethoxyflavone (syringetin), 3,6,2',4'-tetrahydroxyflavone, 7,8,3',4'-tetrahydroxyflavone, 3,5,3',4'-tetrahydroxy-7-methoxyflavone (rhamnetin), 3,6,3',4'-tetramethoxyflavone, 5,7,3',4'-tetramethoxyflavone (luteolin tetramethyl ether), 7,8,3',4'-tetramethoxyflavone tiliroside, 6,8,4'-trichloroflavone, 3,6,4'-trihydroxyflavone, 3,7,4'-trihydroxyflavone (5-deoxykampferol, resokaempferol), 3,3',4'-trihydroxyflavone (3',4'-dihydroxyflavonol), 5,7,8-trihydroxyflavone, 5,7,2'-trihydroxyflavone, 5,3',4'-trihydroxyflavone, 6,3',4'-trihydroxyflavone, 7,8,2'-trihydroxyflavone, 7,8,3'-trihydroxyflavone, 7,8,4'-trihydroxyflavone, 7,3',4'-trihydroxyflavone, 3,5,7-trihydroxy-3',4',5'-trimethoxyflavone (myricetin trimethyl ether), 5,7,4'-trimethoxyflavone (apigenin trimethyl ether), 7,3',4'-trimethoxyflavone, vitexin (apigenin-8-C-glucoside), vitexin-2"-O-rhamnoside (apigenin-8-C-glucoside-2'-rhamnoside).

In an alternative embodiment, the flavone includes one or more of kaempferol (3,5,7,4'-tetrahydroxyflavone), quercetin (3,5,7,3',4'-pentahydroxyflavone), myricetin (3,5,7,3',4',5'-hexahydroxyflavone), apigenin (5,7,4'-trihydroxyflavone), and luteolin (5,7,3',4'-tetrahydroxyflavone). In one embodiment, the flavone is quercetin.

In one embodiment, the amount of flavone included in the adhesion promoter ranges from 1 to 20 phr. In one embodiment, the amount of flavone included in the adhesion promoter ranges from 1 to 10 phr.

In-situ resins are formed as part of the adhesion promoter in the rubber composition and involve the reaction of a methylene acceptor and a methylene donor.

In one embodiment, the rubber composition contains from 2 to 35 phr of the reaction product of a methylene acceptor and a methylene donor. In one embodiment, from 5 to 15 phr of the reaction product is used.

The term "methylene acceptor" is known to those skilled in the art and is used to describe the reactant to which the methylene donor reacts to form what is believed to be a methylol monomer. The condensation of the methylol monomer by the formation of a methylene bridge produces the resin. The initial reaction that contributes the moiety that later forms into the methylene bridge is the methylene donor wherein the other reactant is the methylene acceptor. Representative compounds which may be used as a methylene acceptor include but are not limited to resorcinol, resorcinolic derivatives, monohydric phenols and their derivatives, dihydric phenols and their derivatives, polyhydric phenols and their derivatives, unmodified phenol novolak resins, modified phenol novolak resin, phenol formaldehyde resin, resorcinol novolak resins and mixtures thereof. Examples of methylene acceptors include but are not limited to those disclosed in US-A-6,605,670; US-A-6,541,551; US-A-6,472,457; US-A-5,945,500; US-A-5,936,056; US-A-5,688,871; US-A-5,665,799; US-A-5,504,127; US-A-5,405,897; US-A-5,244,725; US-A-5,206,289; US-A-5,194,513; US-A-5,030,692; US-A-4,889,481; US-A-4,605,696; US-A-4,436,853; and US-A-4,092,455. Examples of modified phenol novolak resins include but are not limited to cashew nut oil modified phenol novolak resin, tall oil modified phenol novolak resin and alkyl modified phenol novolak resin. In one embodiment, the methylene acceptor is a reactive phenol-formaldehyde resin. Suitable reactive phenol-formaldehyde resins include SMD 30207 from Schenectedy Chemicals.

Other examples of methylene acceptors include activated phenols by ring substitution and a cashew nut oil modified novolak-type phenolic resin. Representative examples of activated phenols by ring substitution include resorcinol, cresols, t-butyl phenols, isopropyl phenols, ethyl phenols and mixtures thereof. Cashew nut oil modified novolak-type phenolic resins are commercially available from Schenectady Chemicals Inc under the designation SP6700. The modification rate of oil based on total novolak-type phenolic resin may range from 10 to 50 percent. For production of the novolak-type phenolic resin modified with cashew nut oil, various processes may be used. For example, phenols such as phenol, cresol and resorcinol may be reacted with aldehydes such as formaldehyde, paraformaldehyde and benzaldehyde using acid catalysts. Examples of acid catalysts include oxalic acid, hydrochloric acid, sulfuric acid and p-toluenesulfonic acid. After the catalytic reaction, the resin is modified with the oil.

The amount of methylene acceptor in the rubber stock may vary. In one embodiment, the amount of methylene acceptor ranges from 1 to 25 phr. In another embodiment, the amount of methylene acceptor ranges from 2 to 20 phr.

In-situ resins are formed in the rubber stock and involve the reaction of a methylene acceptor and a methylene donor. The term "methylene donor" is intended to mean a compound capable of reacting with the methylene acceptor and generate the resin in-situ. Examples of methylene donors which are suitable for use in the present invention include hexamethylenetetramine, hexamethoxymethylmelamine, hexaethoxymethylmelamine, imino-methoxymethylmelamine, imino-isobutoxymethylmelamine, lauryloxymethylpyridinium chloride, ethoxymethylpyridinium chloride trioxan and hexamethoxymethylmelamine. In addition, the methylene donors may be N-substituted oxymethylmelamines, of the general formula: 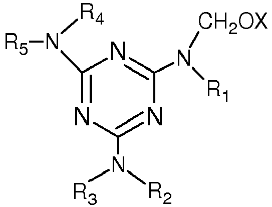 wherein X is hydrogen or an alkyl having from 1 to 8 carbon atoms, R_{1'} R₂, R₃, R₄ and R₅ are individually selected from the group consisting of hydrogen, an alkyl having from 1 to 8 carbon atoms, the group -CH2OX or their condensation products. Specific methylene donors include hexakis-(methoxymethyl)melamine, N,N',N"-trimethyl/N,N',N"-trimethylolmelamine, hexamethylolmelamine, N,N',N"-dimethylolmelamine, N-methylolmelamine, N,N'-dimethylolmelamine, N,N',N"-tris(methoxymethyl)melamine and N,N'N"-tributyl-N,N',N"-trimethylol-melamine. The N-methylol derivatives of melamine are prepared by known methods.

The amount of methylene donor that is present in the adhesion promoter may vary. In one embodiment, the amount of methylene donor that is present will range from about 1 phr to 25 phr. In one embodiment, the amount of methylene donor ranges from about 2 phr to 20 phr.

It is readily understood by those having skill in the art that the rubber compositions used in tire components would be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as oils, resins including tackifying resins, silicas, and plasticizers, fillers, pigments, fatty acid, zinc oxide, waxes, antioxidants and antiozonants, peptizing agents and reinforcing materials such as, for example, carbon black. As known to those skilled in the art, depending on the intended use of the sulfur vulcanizable and sulfur vulcanized material (rubbers), the additives mentioned above are selected and commonly used in conventional amounts.

The rubber compound may contain various conventional rubber additives. Typical additions of carbon black comprise about 20 to 200 parts by weight of diene rubber (phr), preferably 50 to 100 phr.

A number of commercially available carbon blacks may be used. Included in the list of carbon blacks are those known under the ASTM designations N299, S315, N326, N330, M332, N339, N343, N347, N351, N358, N375, N539, N550 and N582. Such processing aids may be present and can include, for example, aromatic, naphthenic, and/or paraffinic processing oils. Typical amounts of tackifying resins, such as phenolic tackifiers, range from 1 to 3 phr. Silica, if used, may be used in an amount of about 5 to about 80 phr, often with a silica coupling agent. Representative silicas may be, for example, hydrated amorphous silicas. Typical amounts of antioxidants comprise about 1 to about 5 phr. Representative antioxidants may be, for example, diphenyl-p-phenylenediamine, polymerized 1,2-dihydro-2,2,4-trimethylquinoline and others, such as, for example, those disclosed in the Vanderbilt Rubber Handbook (1990), Pages 343 through 362. Typical amounts of antiozonants comprise about 1 to about 5 phr. Representative antiozonants may be, for example, those disclosed in the Vanderbilt Rubber Handbook (1990), Pages 363 through 367. Typical amounts of fatty acids, if used, which can include stearic acid comprise about 0.5 to about 3 phr. Typical amounts of zinc oxide comprise about 2 to about 10 phr. Typical amounts of waxes comprise about 1 to about 5 phr. Often microcrystalline waxes are used. Typical amounts of peptizers comprise about 0.1 to about 1 phr. Typical peptizers may be, for example, pentachlorothiophenol and dibenzamidodiphenyl disulfide. The presence and relative amounts of the above additives are considered to be not an aspect of the present invention which is more primarily directed to the utilization of the combination of the reaction product of the flavone and methylene donor.

The vulcanization is conducted in the presence of a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur vulcanizing agent is elemental sulfur. As known to those skilled in the art, sulfur vulcanizing agents are used in an amount ranging from about 0.5 to about 5 phr, or even, in some circumstances, up to about 8 phr, with a range of from about 3 to about 5 being preferred.

Accelerators are used to control the time and/or temperature required for vulcanization and to improve the properties of the vulcanizate. In one embodiment, a single accelerator system may be used, i.e., primary accelerator. Conventionally, a primary accelerator is used in amounts ranging from about 0.5 to about 2.5 phr. In another embodiment, combinations of two or more accelerators which is generally used in the larger amount (0.5 to 2.0 phr), and a secondary accelerator which is generally used in smaller amounts (0.05 to 0.50 phr) in order to activate and to improve the properties of the vulcanizate. Combinations of these accelerators have been known to produce a synergistic effect of the final properties and are somewhat better than those produced by use of either accelerator alone. In addition, delayed action accelerators may be used which are not affected by normal processing temperatures but produce satisfactory cures at ordinary vulcanization temperatures. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound.

The rubber composition, as noted, excludes cobalt. However, as is known in the art some residual amount of cobalt may be present in mixing equipment and consequently appear in rubber compositions. The rubber composition is then said to be essentially free of cobalt. By essentially free, it is meant that the amount of cobalt, if any, is very low and is present only due to contamination by process equipment and normal handling in the material procurement process. In one embodiment, the amount of cobalt is less than 0.1 phr. In one embodiment, the amount of cobalt is less than 0.05 phr. In one embodiment, the about of cobalt is less than 0.01 phr.

The rubber composition may be described as consisting essentially of a diene based elastomer, and an adhesion promoter derived from a flavone, a methylene acceptor, and a methylene donor. In this instance, by "consisting essentially of " means that while other typical compounding additives as described herein may be present in the rubber composition, cobalt and cobalt salts are not included as they have a material and undesirable effect on the behavior of the rubber composition in the sense that they have an undesirable environmental effect.

The tire can be built, shaped, molded and cured by various methods which will be readily apparent to those having skill in such art.

The prepared tire of this invention is conventionally shaped and cured by methods known to those having skill in such art.

The invention may be better understood by reference to the following examples in which the parts and percentages are by weight unless otherwise indicated.

### Example 1

In this example, the effect of replacing a cobalt salt with quercetin is demonstrated for rubber compounds containing carbon black and a methylene acceptor/methylene donor resin. Four experimental rubber compounds were prepared in a lab Banbury mixer as indicated in Table 1. Physical properties of the compounds were evaluated as indicated in Table 2.

**Table 1**

| Sample No. | A | B | C | D |
|---|---|---|---|---|
| Sample Type | control | compare | inventive | inventive |
| First Non-Productive Mixing Stage | | | | |
| Cis-1,4-polyisoprene rubber¹ | 100 | 100 | 100 | 100 |
| Carbon black | 60 | 60 | 60 | 60 |
| Silica | 5 | 5 | 5 | 5 |
| Processing oil | 2 | 2 | 2 | 2 |
| Fatty acid | 1 | 1 | 1 | 1 |
| Zinc oxide | 7 | 7 | 7 | 7 |
| Cobalt Salt² | 0.5 | 0 | 0 | 0 |
| Quercetin | 0 | 0 | 3 | 5 |

| Productive Mixing Stage | | | | |
|---|---|---|---|---|
| Sulfur³ | 5 | 5 | 5 | 5 |
| Accelerators | 1 | 1 | 1 | 1 |
| Phenol/formaldehyde resin⁴ | 3 | 3 | 3 | 3 |
| Hexamethoxymethylmelamine | 4.17 | 4.17 | 4.17 | 4.17 |

| | | | | |
|---|---|---|---|---|
| ¹75/25 blend of natural rubber and NAT2200 from The Goodyear Tire & Rubber Company ²Cobalt neodecanoate ³Insoluble sulfur, 80% active ⁴ SMD 30207 from Schenectedy Chemicals | | | | |

**Table 2**

| Rheometer¹, 150°C | A | B | C | D |
|---|---|---|---|---|
| Minimum torque (dNm) | 3.89 | 4.0 | 4.77 | 4.65 |
| Delta torque (dNm) | 40.8 | 38.1 | 38.9 | 37.0 |
| T₉₀ (minutes) | 23.9 | 34.2 | 31.9 | 32.1 |
| | | | | |
| Stress-strain ATS (cured 35 minutes at 155°C) | | | | |
| Tensile strength (MPa) | 18.4 | 17.3 | 16.6 | 12.0 |
| Elongation at break (%) | 373 | 353 | 309 | 242 |
| 100% modulus (MPa) | 5.1 | 4.6 | 5.1 | 4.6 |
| Rebound, 100°C (%) | 51 | 53 | 56 | 56 |
| Hardness, 100°C | 83 | 78 | 76 | 73 |
| Tear strength², N/mm (95°C) | 94 | 85 | 77 | 71 |
| | | | | |
| Wire Adhesion³ | | | | |
| (cured 35 minutes at 155°C) | | | | |
| Original at room temperature, N | 664 | 494 | 646 | 704 |
| Rubber coverage, % | 85 | 45 | 80 | 90 |
| Aged 10 days in water at 90 °C, N | 673 | 733 | 817 | 810 |
| Rubber coverage, % | 20 | 60 | 70 | 70 |
| Aged 10 days in N₂ at 120 °C, N | 825 | 727 | 815 | 787 |
| Rubber coverage, % | 85 | 75 | 95 | 95 |
| | | | | |
| Monsanto RPA 1%. 100°C. 1 hz | | | | |
| G', uncured | 285 | 277 | 328 | 335 |
| G' at 1% strain (KPa) | 11013 | 10094 | 9071 | 7867 |
| G' at 10% strain (KPa) | 3870 | 3651 | 3859 | 3255 |
| Tan delta at 10% strain | 0.242 | 0.238 | 0.205 | 0.219 |

| | | | | |
|---|---|---|---|---|
| ¹ Cure properties were determined using a Monsanto oscillating disc rheometer (MDR) which was operated at a temperature of 150 °C and at a frequency of 11 Hertz. A description of oscillating disc rheometers can be found in The Vanderbilt Rubber Handbook edited by Robert O. Ohm (Norwalk, Conn., R. T. Vanderbilt Company, Inc., 1990), Pages 554 through 557. The use of this cure meter and standardized values read from the curve are specified in ASTM D-2084. A typical cure curve obtained on an oscillating disc rheometer is shown on Page 555 of the 1990 edition of The Vanderbilt Rubber Handbook. ² The hot tear resistance property (tear strength) determination is conducted for peel adhesion of a sample to another sample of the same material. A description may be found in ASTM D4393 except that a sample width of 2.5 cm is used and a clear Mylar plastic film window of a 5 mm width is inserted between the two test samples. It is an interfacial adhesion measurement (pulling force expressed in N/mm units) between two layers of the same tested compound which have been co-cured together with the Mylar film window therebetween. The purpose of the Mylar film window is to delimit the width of the pealed area. The DRI property can be determined by the formula: DRI=(G'/(300 percent modulus)) x (100). This property is considered herein to be measure, or indication of the cracking and tear propagation resistance of the compound. ³ Standard wire and textile cord adhesion tests (SWAT) were conducted by embedding a single cord in the respective rubber compositions. The rubber articles were then cured as indicated. The cord in these rubber compositions were then subjected to a pull-out test, according to ASTM Standard D2229-73. ⁴ Viscoelastic properties Tan Delta and G' were measured using an Alpha Technologies Rubber Process Analyzer (RPA). A description of the RPA 2000, its capability, sample preparation, tests and subtests can be found in these references. H A Pawlowski and J S Dick, Rubber World, June 1992; J S Dick and H A Pawlowski, Rubber World, January 1997; and J S Dick and J A Pawlowski, Rubber & Plastics News, April 26 and May 10, 1993. | | | | |

As seen in Tables 1 and 2, the replacement of cobalt with quercetin in a methylene donor/methylene acceptor containing rubber composition results in equal or superior adhesion to wire, in both original and aged samples.

While the embodiments described herein have been directed to a rubber composition and a tire, the present invention is not so limited. The rubber composition may also be used in various applications, including but not limited to power transmission belts, hoses, tracks, tires, air sleeves, and conveyor belts.

## Claims

1. A rubber composition comprising:
(A) a diene based elastomer; and
(B) an adhesion promoter derived from
(1) a flavone; and
(2) the reaction product of
(a) a methylene donor selected from the group consisting of hexamethylenetetramine, hexamethoxymethylmelamine, hexamethoxymethylmelamine, imino-methoxymethylmelamine, imino-isobutoxymethylmelamine, lauryloxymethylpyridinium chloride, ethoxymethylpyridinium chloride, trioxan hexamethoxymethylmelamine and N-substituted oxymethyl melamines of the formula: 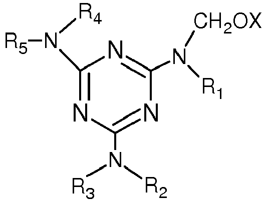 wherein X is selected from the group consisting of hydrogen and an alkyl having from 1 to 8 carbon atoms; and R₁, R₂, R₃, R₄ and R₅ are individually selected from the group consisting of hydrogen, an alkyl having from 1 to 8 carbon atoms, the group -CH₂OX and their condensation products; and
(b) a methylene acceptor selected from the group consisting of resorcinol, resorcinolic derivatives, monohydric phenols and their derivatives, dihydric phenols and their derivatives, polyhydric phenols and their derivatives, unmodified phenol novolak resins, modified phenol novolak resins, phenol formaldehyde resins, and resorcinol novolak resins;
wherein the rubber composition comprises less than 0.1 phr of cobalt.

2. The rubber composition of claim 1, wherein said rubber is selected from the group consisting of medium vinyl polybutadiene, styrene-butadiene rubber, synthetic cis-1,4-polyisoprene, synthetic 3,4-polyisoprene, natural rubber, cis-polybutadiene, styrene-isoprene rubber, styrene-isoprene-butadiene rubber, acrylonitrile-butadiene rubber, carboxylated acrylonitrile-butadiene rubber and mixtures thereof.

3. The rubber composition of claim 1 or 2 wherein the amount of flavone ranges from 1 to 20 phr.

4. The rubber composition of claim 1 or 2 wherein the amount of flavone ranges from 3 to 10 phr.

5. The rubber composition of at least one of the previous claims, wherein the amount of methylene donor ranges from 1 to 25 phr.

6. The rubber composition of at least one of the previous claims, wherein the amount of methylene donor ranges from 3 to 15 phr.

7. The rubber composition of at least one of the previous claims, wherein the amount of methylene acceptor ranges from 1 to 25 phr or from 3 to 15 phr.

8. The rubber composition of at least one of the previous claims, wherein the amount of methylene acceptor ranges from 3 to 15 phr.

9. The rubber composition of at least one of the previous claims, wherein the amount of cobalt is less than 0.01 phr.

10. The rubber composition of at least one of the previous claims, wherein said flavone is selected from the group conisting of kaempferol (3,5,7,4'-tetrahydroxyflavone), quercetin (3,5,7,3',4'-pentahydroxyflavone), myricetin (3,5,7,3',4',5'-hexahydroxyflavone), apigenin (5,7,4'-trihydroxyflavone), and luteolin (5,7,3',4'-tetrahydroxyflavone) and mixtures thereof.

11. The rubber composition of claim 10 wherein said flavone is quercetin.

12. The rubber composition of at least one of the previous claims, wherein said rubber composition is a component of a power transmission belt, hose, track, tire, air sleeve, or a conveyor belt.

13. A pneumatic tire having a component containing or consisting essentially of the rubber composition in accordance with at least one of the claims 1 to 11.

14. The pneumatic tire of claim 13 wherein the component comprises a steel cord and the rubber composition is in contact with said steel cord.

## Patentansprüche

1. Kautschukzusammensetzung, umfassend:
(A) ein dienbasiertes Elastomer; und
(B) einen Haftvermittler, abgeleitet von
(1) einem Flavon; und
(2) dem Reaktionsprodukt von
(a) einem Methylendonator, ausgewählt aus der Gruppe, bestehend aus Hexamethylentetramin, Hexamethoxymethylmelamin, Hexamethoxymethylmelamin, Imino-Methoxymethylmelamin, Imino-Isobutoxymethylmelamin, Lauryloxymethylpyridiniumchlorid, Ethoxymethylpyridiniumchlorid, Trioxanhexamethoxymethylmelamin und N-substituierten Oxymethylmelaminen der Formel: 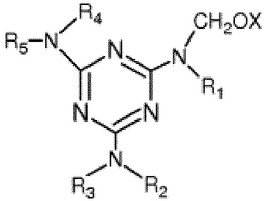 wobei X aus der Gruppe ausgewählt ist, bestehend aus Wasserstoff und einem Alkyl mit 1 bis 8 Kohlenstoffatomen; und R₁, R₂, R₃, R₄ und R₅ alle individuell aus der Gruppe ausgewählt sind, bestehend aus Wasserstoff, einem Alkyl mit 1 bis 8 Kohlenstoffatomen, der Gruppe - CH₂OX und deren Kondensationsprodukten; und
(b) einem Methylenakzeptor, ausgewählt aus der Gruppe, bestehend aus Resorcinol, Resorcinolderivaten, einwertigen Phenolen und deren Derivaten, zweiwertigen Phenolen und deren Derivaten, mehrwertigen Phenolen und deren Derivaten, unmodifizierten Phenol-Novolak-Harzen, modifizierten Phenol-Novolak-Harzen, Phenol-Formaldehydharzen und Resorcinol-Novolak-Harzen;
wobei die Kautschukzusammensetzung weniger als 0,1 phr Kobalt umfasst.

2. Kautschukzusammensetzung nach Anspruch 1, wobei der Kautschuk aus der Gruppe ausgewählt ist, bestehend aus Polybutadien mit mittlerem Vinylgehalt, Styrol-Butadien-Kautschuk, synthetischem cis-1,4-Polyisopren, synthetischem 3,4-Polyisopren, Naturkautschuk, cis-Polybutadien, Styrol-Isopren-Kautschuk, Styrol-Isopren-Butadien-Kautschuk, Acrylnitril-Butadien-Kautschuk, carboxyliertem Acrylnitril-Butadien-Kautschuk und Mischungen davon.

3. Kautschukzusammensetzung nach Anspruch 1 oder 2, wobei die Menge an Flavon sich auf 1 bis 20 phr beläuft.

4. Kautschukzusammensetzung nach Anspruch 1 oder 2, wobei die Menge an Flavon sich auf 3 bis 10 phr beläuft.

5. Kautschukzusammensetzung nach mindestens einem der vorhergehenden Ansprüche, wobei die Menge an Methylendonator sich auf 1 bis 25 phr beläuft.

6. Kautschukzusammensetzung nach mindestens einem der vorhergehenden Ansprüche, wobei die Menge an Methylendonator sich auf 3 bis 15 phr beläuft.

7. Kautschukzusammensetzung nach mindestens einem der vorhergehenden Ansprüche, wobei die Menge an Methylenakzeptor sich auf 1 bis 25 oder auf 3 bis 15 phr beläuft.

8. Kautschukzusammensetzung nach mindestens einem der vorhergehenden Ansprüche, wobei die Menge an Methylenakzeptor sich auf 3 bis 15 phr beläuft.

9. Kautschukzusammensetzung nach mindestens einem der vorhergehenden Ansprüche, wobei die Menge an Kobalt weniger als 0,01 phr beträgt.

10. Kautschukzusammensetzung nach mindestens einem der vorhergehenden Ansprüche, wobei das Flavon aus der Gruppe ausgewählt ist, bestehend aus Kaempferol (3,5,7,4'-Tetrahydroxyflavon), Quercetin (3,5,7,3',4'-Pentahydroxyflavon), Myricetin (3,5,7,3',4',5'-Hexahydroxyflavon), Apigenin (5,7,4'-Trihydroxyflavon) und Luteolin (5,7,3',4'-Tetrahydroxyflavon) und Mischungen davon.

11. Kautschukzusammensetzung nach Anspruch 10, wobei das Flavon Quercetin ist.

12. Kautschukzusammensetzung nach mindestens einem der vorhergehenden Ansprüche, wobei die Kautschukzusammensetzung eine Komponente eines Kraftübertragungsriemens, eines Schlauchs, einer Kette, eines Reifens, eines Luftbalgs oder eines Förderbandes ist.

13. Luftreifen mit einem Bauteil, das im Wesentlichen die Kautschukzusammensetzung gemäß mindestens einem der Ansprüche 1 bis 11 enthält oder daraus besteht.

14. Luftreifen nach Anspruch 13, wobei das Bauteil einen Stahlkord umfasst und die Kautschukzusammensetzung mit diesem Stahlkord in Kontakt ist.

## Revendications

1. Composition de caoutchouc comprenant :
(A) un élastomère à base diénique ; et
(B) un promoteur de l'adhésion qui dérive
(1) d'une flavone et
(2) du produit réactionnel
(a) d'un donneur de groupes méthylène choisi parmi le groupe constitué par l'hexaméthylènetétramine, l'hexaméthoxyméthylmélamine, l'hexaméthoxyméthylmélamine, l'iminométhoxyméthylmélamine, l'imino-isobutoxyméthylmélamine, le chlorure de lauryloxyméthylpyridinium, le chlorure d'éthoxyméthylpyridinium, l'hexaméthoxyméthylmélamine de trioxanne et des oxyméthylmélamines substituées sur l'atome d'azote répondant à la formule : 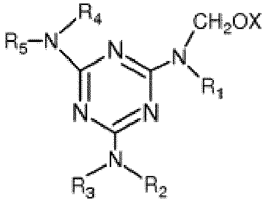 dans laquelle X est choisi parmi le groupe constitué par un atome d'hydrogène et un groupe alkyle contenant de 1 à 8 atomes de carbone; et R₁, R₂, R₃, R₄ et R₅ sont choisis de manière individuelle parmi le groupe constitué par un atome d'hydrogène, un groupe alkyle contenant de 1 à 8 atomes de carbone, le groupe -CH₂OX et leurs produits de condensation ; et
(b) d'un accepteur de groupes méthylène choisi parmi le groupe constitué par le résorcinol, des dérivés résorcinoliques, des phénols monovalents et leurs dérivés, des phénols divalents et leurs dérivés, des phénols polyvalents et leurs dérivés, des résines de phénol novolaque non modifiées, des résines de phénol novolaque modifiées, des résines de phénol formaldéhyde et des résines de résorcinol novolaque ;
dans laquelle la composition de caoutchouc comprend moins de 0,1 phr de cobalt.

2. Composition de caoutchouc selon la revendication 1, dans laquelle ledit caoutchouc est choisi parmi le groupe constitué par du polybutadiène à teneur moyenne en groupes vinyle, du caoutchouc de styrène-butadiène, du 1,4-cis-polyisoprène synthétique, du 3,4-polyisoprène synthétique, du caoutchouc naturel, du cis-polybutadiène, du caoutchouc de styrène-isoprène, du caoutchouc de styrène-isoprène-butadiène, du caoutchouc d'acrylonitrile-butadiène, du caoutchouc d'acrylonitrile-butadiène carboxylé, ainsi que leurs mélanges.

3. Composition de caoutchouc selon la revendication 1 ou 2, dans laquelle la quantité de flavone se situe dans la plage de 1 à 20 phr.

4. Composition de caoutchouc selon la revendication 1 ou 2, dans laquelle la quantité de flavone se situe dans la plage de 3 à 10 phr.

5. Composition de caoutchouc selon au moins une des revendications précédentes, dans laquelle la quantité du donneur de groupes méthylène se situe dans la plage de 1 à 25 phr.

6. Composition de caoutchouc selon au moins une des revendications précédentes, dans laquelle la quantité du donneur de groupes méthylène se situe dans la plage de 3 à 15 phr.

7. Composition de caoutchouc selon au moins une des revendications précédentes, dans laquelle la quantité de l'accepteur de groupes méthylène se situe dans la plage de 1 à 25 phr ou de 3 à 15 phr.

8. Composition de caoutchouc selon au moins une des revendications précédentes, dans laquelle la quantité de l'accepteur de groupes méthylène se situe dans la plage de 3 à 15 phr.

9. Composition de caoutchouc selon au moins une des revendications précédentes, dans laquelle la quantité de cobalt est inférieure à 0,01 phr.

10. Composition de caoutchouc selon au moins une des revendications précédentes, dans laquelle ladite flavone est choisie parmi le groupe constitué par le kaempférol (3,5,7,4'-tétrahydroxyflavone), la quercétine (3,5,7,3',4'-pentahydroxyflavone), la myricétine (3,5,7,3',4',5'-hexahydroxyflavone), l'apigénine (5,7,4'-trihydroxyflavone) et la lutéoline (5,7,3',4'-tétrahydroxyflavone).

11. Composition de caoutchouc selon la revendication 10, dans laquelle ladite flavone est de la quercétine.

12. Composition de caoutchouc selon au moins une des revendications précédentes, dans laquelle ladite composition de caoutchouc représente un composant d'une courroie de transmission d'énergie, d'un tuyau flexible, d'une chenille, d'un bandage pneumatique, d'un manchon pour l'air ou d'une courroie transporteuse.

13. Bandage pneumatique possédant un composant contenant ou constitué essentiellement par la composition de caoutchouc selon au moins une des revendications 1 à 11.

14. Bandage pneumatique selon la revendication 13, dans lequel le composant comprend un câblé en acier et la composition de caoutchouc entre en contact avec ledit câblé en acier.
